# EUROPEAN PATENT SPECIFICATION

(11) **EP 1 821 230 B1**
(45) Date of publication and mention of the grant of the patent: **13.08.2008**
(21) Application number: 06101719.0
(22) Date of filing: 15.02.2006
(51) Int. Cl.: G06F 21/00, G06F 21/02, G06F 21/24

(54) **External storage medium**
Externes Speichermedium
Support de stockage externe

(43) Date of publication of application: 22.08.2007
(73) Proprietor: NTT DoCoMo, Inc., Tokyo (JP)
(72) Inventor: Zugenmaier, Alf, 81241 München (DE); Lachmund, Sven, 80687 München (DE)
(74) Representative: Betten & Resch

(56) References cited:
- EP-A- 0 696 016
- EP-A- 1 610 199
- US-A- 5 870 726
- US-A1- 2002 004 910
- US-A1- 2004 228 487
- US-B1- 6 249 868

## Description

### FIELD OF INVENTION

The present invention relates to an external storage medium, in particular to an external storage medium which can be connected to a computer and onto which data can be written while considering security requirements such as access control.

### BACKGROUND OF THE INVENTION

The most general approach to securely store data is to use some form of encryption in order to make it difficult for an unauthorised user who does not know the decryption key(s) to read the stored data. There is a vast variety of products that are capable of encrypting user data. The available products may be roughly divided into two categories, a first one being hardware based, the second one being software solutions.

In the following some existing software encryption solutions are briefly introduced.

Numerous software solutions exist. There is general purpose encryption software (e.g. PGP from PGP Corporation), software specialised for removal media (e.g. FlashDrive Crypto by ADVS Technologies Inc.) or software especially for one specific model (e.g. CruzerLock from Sandisk Inc.), the difference between the latter two being mainly in the software licensing model. General purpose encryption software may be more cumbersome to use because of extra requirements imposed by changeable media.
Dekart Private Disk disk encryption software encrypts arbitrary media by storing an encrypted image on them. Required executables to access the media can be stored on the external device. No installation of specific software is needed for use with other computers. The product is only available for Microsoft Windows operating systems.

PGP Corporation provides several software tools that are among other features able to encrypt and decrypt files. In addition, they provide virtual disk drives which contain encrypted data. PGP keys are used as credential to encrypt and decrypt these files and drives. On each device the PGP software is to be installed in order to access the encrypted user data.

There are known Hardware encryption solutions which at least have an encryption engine implemented in hardware.

Some also allow the key to be stored on hardware that can be removed. Some available solutions allow the key to be unlocked based on biometric data, i.e. fingerprint scans.

There exist biometric solutions, such as biometric USB key drives which provide protection of data using fingerprint verification. Also these solutions require the installation of additional software and even hardware to access the data.

The available hardware solutions have different disadvantages for accessing the encrypted data: either the installation of a specific software on the host is necessary or the practicability of the solution is doubtful. If for instance a hardware solution requires an additional hardware token (e.g. smartcard) to encrypt data, the user will likely keep the token not separated from the hardware solution. In addition, if he looses the token, access is impossible.

Usage of external storage media is considered critical by many companies from a security point of view. In most cases encryption of data on external media would be sufficient. However there are practical problems with this approach. In order to access encrypted data, either particular encryption software is to be executed on the computer the media is attached to, or if hardware encryption is used, at least special software that is able to communicate the access credentials to the external media is required. However, it is often not desirable or impractical to have additional software installed just for the purpose of data transfer by means of an external medium. Such an additional installation is inconvenient for the user, or it may be just undesirable or even prohibited by company security regulations which define the software installations considered allowable in the company. Therefore the software-based as well as the hardware based solutions known in the art come along with disadvantages which should be overcome.

Moreover, there are further deficiencies coming along with the solutions known from the prior art. E.g. for some solutions known in the prior art it is in some cases required to enter the password on an unknown computer. This computer could, however, potentially log this password. Because of the widespread use of password reuse, this may not only compromise the security of the data stored on the external medium but also other data. It would therefore be desirable to have a solution which does not require to enter a password on unknown and possibly untrusted devices. On the other hand, hardware based encryption solutions for external media that make use of biometry would not suffer from the problems mentioned above. However, the biometric sensors and software add considerably to the hardware costs and media size. Furthermore, since in an adversarial situation the biometry is used in a non-supervised setting, the security guaranties it offers are relatively low. This is especially true for low cost biometric sensors.

In view of the foregoing it is desirable to secure data stored on external storage media while in the same time being able to transfer data via this media securely to other devices without having the need to preinstall particular software to access the media.

US 2002/0004910 discloses a method and system for limiting use of a computer apparatus when the apparatus is disconnected from a network. Under the method and system of the present invention, the computer apparatus will periodically contact a host or data center, via a network, to be updated, backed-up, enabled, reenabled, disabled, etc. However, if the computer apparatus is being used beyond its predetermined time period or conditions of use, the apparatus can be automatically disabled without having to contact the host or data center via the network.

US-5,870,726 discloses a protected software rental using smart cards. There is disclosed a system comprising a central processing unit and a dedicated unit. Said dedicated unit receives a communication protection module which controls a sequence controlling module containing a state machine and a cycle counter, a timing module activated by said sequence controlling module and a software protection module also activatable by said sequence controlling module.

### SUMMARY OF THE INVENTION

According to one embodiment there is provided an external storage medium which can be connected to a computer and onto which user data can be written and from which user data can be read by a user of said computer, that medium comprising:
a storage unit for storing therein said user data;
a storage unit for storing therein an expiration condition;
a counter and/or a timer for incrementally measuring a time value and/or a number of events;
a connectivity detection unit for detecting whether said external storage unit is
connected to said computer or not;
a control module for if said connectivity detection unit detects that said external storage medium has been detached from said computer, triggering said counter or said timer to start to operate, said control module being adapted to compare the value of said measured time and/or said measured number of events with said expiration condition, whereas if said control unit determines that said value of said measured time and/or said measured number of events coincides with said expiration condition said control unit carries out a processing such that said user data cannot be freely accessed any longer by a user of a computer to which said external storage medium is connected.

The solution circumvents the problem of making particular software installations necessary by defining an expiration condition defining the limitation of unrestricted access to user data. The triggering of a counter/timer through the detachment together with the expiration condition which sets the frame within which the data may be accessed in an unlimited manner avoids the need to install any software or hardware on un-trusted devices to which the storage medium could be connected.

According to one embodiment the external storage medium further comprises:
a storage unit for storing therein access credentials based on which a user is either granted or denied access to said user data, wherein said processing occurs such that said user data cannot be freely accessed any longer by a user of a computer to which said external storage medium is connected, wherein said processing comprises:
encrypting or decrypting said user data based on said access credentials.

The access credentials may enable a user of a trusted device to still access the user data after the expiration time while protecting the user data after the expiration time against unlimited access. This is possible by defining the access credentials together with an expiration condition, e.g. by defining them as being valid for a limited time after the medium is detached from a computer or mobile phone with which the access credentials and their expiration condition time have been defined and written to the external medium. It is then possible to access all encrypted data on the external media if it is attached to a different computer before the credential expiry condition is fulfilled (e.g. until the defined time elapses). After the expiration time only the authorised user still can access the user data.

According to one embodiment said processing such that said user data cannot be freely accessed any longer by a user of a computer to which said external storage medium is connected comprises:
deleting said user data.

The deletion of the user data is a simple but efficient way to limit the access to unauthorised users. While this embodiment has the disadvantage that no access is possible anymore by anybody, even by the user who has written the data onto the medium, there is no need to apply an encryption and to define access credentials such as keys.

According to one embodiment the processing such that said user data cannot be freely accessed any longer by a user of a computer to which said external storage medium is connected comprises:
deleting the access credentials stored in said external storage medium.

The deletion of the access credentials makes sure that no unauthorised party can access the data which are stored in encrypted form on the medium.

According to one embodiment said events the number of which is measured by said counter are accesses to said user data by a user. This may enable a user to define a limited number of accesses to the user data. With such an embodiment a digital rights management may be implemented which e.g. limits the number of times an audio data file may be listened to or a movie data file may be watched.

According to one embodiment said expiration condition is one or more of the following:
a number of accesses to said user data;
an expiration time after said external storage medium has been detached from said computer.

The expiration time and the number of accesses may be used alone or in combination to define the expiration condition.

According to one embodiment said external storage medium further comprises:
an encryption module for encrypting and/or decrypting said user data based on said access credentials;
a storage for storing therein encrypted user data;
a storage for storing therein unencrypted user data.

The provision of storages for encrypted and unencrypted data together with an encryption module makes it possible to store user data without restriction after the expiration condition is met together with data to which access is restricted after the expiration condition has been met.

According to one embodiment said expiration condition assumes a predefined value unless it is explicitly changed by the user of said computer. E.g. the expiration delay time could be fixed, i.e. every time the external media is unplugged, the access credential will remain valid for this time.

According to a further embodiment this expiration delay time could be set explicitly every time before the media is detached.

According to a further embodiment the medium comprises a module for defining said access credentials to be valid for dedicated files and/or directories only. This allows differentiating between data for which protection is necessary and data for which an access limitation is of less significance.

According to one embodiment there is provided an apparatus comprising:
an external medium access interface for being connected to an external storage medium according to one of the preceding claims;
an external medium configuration module for enabling said user of said computer to configure or define one or more of the following:
   the expiration condition to be set in said external storage medium;
   the access credentials to be stored in said external storage medium.

For setting the access credentials and/or the expiration condition there is provided an apparatus (a host) that has a specific module for that purpose (e.g. by running a particular software). Since the access credentials can remain valid after the media has been detached, there is, however, no need to install the software on other hosts as well. There is only the need to install the software on the device that is mainly used by the owner of the external medium, and as long as the expiration condition is not met the user data on the medium may also be accessed by other hosts.

This overcomes the significant problems that exist with current solutions. All software and most hardware based encryption technologies require software to be installed on the computer that accesses the external medium. Sometimes this could be impossible due to administrative limitations on that computer or due to incompatibilities of the operating systems. The solution according to embodiments of the invention, however, is easy to deploy since only one device needs to be prepared to access and configure the external medium.

The apparatus on which the module is to be installed can either be a computer, a mobile phone or another mobile or stationary device the external medium can be attached to.

### BRIEF DESCRIPTION OF THE DRAWINGS

Fig. 1 illustrates a configuration in which an external medium and a host according to embodiments of the invention may be used.
Fig. 2 schematically illustrates a configuration of external medium according to an embodiment of the invention.
Fig. 3 schematically illustrates a configuration of a trusted device according to an embodiment of the invention.
Fig. 4 schematically illustrates a configuration of external medium according to a further embodiment of the invention.
Fig. 5 schematically illustrates a sequence diagram illustrating an operation of an external medium and a host according to an embodiment of the invention.

### DETAILED DESCRIPTION

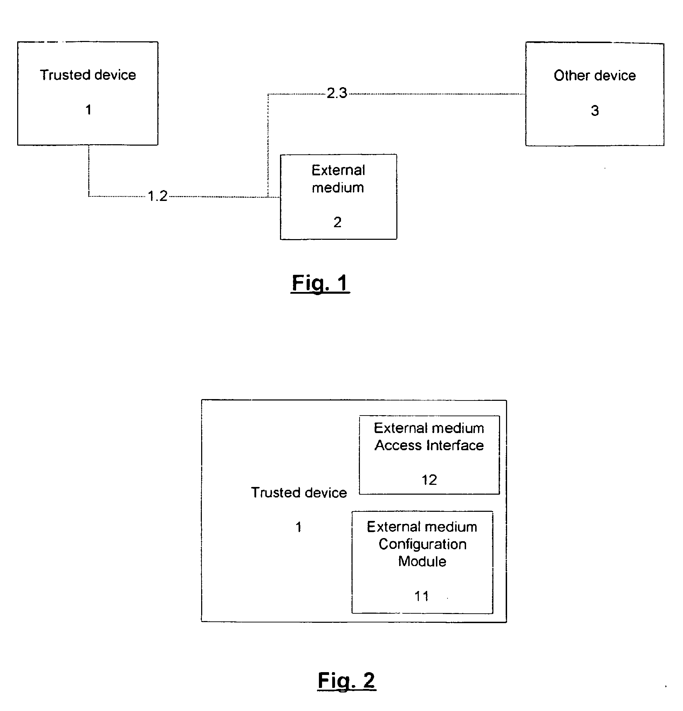

A configuration according to an embodiment of the invention will now be explained in connection with Figure 1. Fig. 1 shows the basic setup: at first the external medium 2 is attached to a trusted device 1 (which may e.g. be a computer or a mobile phone) via connection 1.2. Via connection 1.2. the trusted device may write any data (e.g. user data) onto the external medium to store it thereupon. The thus stored data may be stored on the external medium in a manner which allows only limited access to the data. If in the following the term user data is used, this term refers to any arbitrary data which the user wishes to store onto the external medium in such a manner that it is somehow protected by limiting the access to the thus stored user data in some way.

The mechanism for storing the (user) data in a manner which grants only limited access will now be further explained in connection with Fig. 2. Trusted device 1 has some external medium access interface 12 (implemented in software or in hardware or by a combination of both) for accessing the external medium. This interface may e.g. be a USB interface, a Bluetooth interface, an lrDA interface or any other interface which enables the external medium and the trusted device to be connected to each other and to exchange data. Furthermore, for storing the data onto the external medium in a manner such that the access to the data is limited, the trusted device may have thereupon installed a module 11 (which may be implemented in software, in hardware or by a combination of both) for configuring on the external device access credentials. In addition to configuring or writing the access credentials onto the external medium, an expiration condition defining the expiration of the credentials is set by module 11.

The access credentials may be any data which define a condition or a requirement for accessing the (user) data, in other words, the access credentials are data based on which access to the user data stored on the external storage medium is either granted or denied to a user. The access credentials may e.g. be one or more keys which are necessary to decrypt the user data stored on the external medium in an encrypted form.

On the other hand, the expiration condition for the access credentials set or defined by the configuration module 11 of trusted device 1 may e.g. be an expiration time, such as a moment of time (i.e. a certain point in time) or a period of time. This defines then the time until which the access credentials are valid. The trusted device may write onto the external medium not only the access credentials but also a condition or a criterion for their validity such as their expiration time, the expiration criterion.

According to one embodiment the access credentials are one or more keys for decrypting the user data which are stored in the external medium in an encrypted form and which can only be accessed or read by a user as long as the access credentials (the keys) are valid or existing. With this embodiment there may be achieved the effect that the user data (which are stored in an encrypted form on the external medium) may be accessed until the keys are deleted which will take place once the expiration time is reached.

According to a further embodiment the access credentials also are one or more keys, however, the user data are stored on the external medium in a non-encrypted form. Once the expiration condition (e.g. a certain moment in time) has been reached, the access credentials (the keys) are used to encrypt the previously non-encrypted data so that they are not accessible any more to a user who does not know the keys to decrypt the data. This embodiment operates in a mirror-like way compared to the previous embodiment because initially data is stored in non-encrypted form, while in the previous embodiment the data are initially stored in encrypted form onto the external medium.

In addition to the access credentials according to an embodiment an expiration condition is set on the external storage medium. The expiration condition is a value which is compared with another value of a counter or timer which incrementally increases, and if the counter or timer reaches the value set by the expiration condition there is carried out a processing based on the access credentials which prevents a user to freely access the user data anymore. This processing may e.g. consist in the deletion of the access credentials, or it may consist in performing an encryption of the user data which have previously been unencrypted so that after the encryption was performed the user data cannot be freely accessed anymore.

According to an embodiment the expiration condition may correspond to a certain value set in a counter counting a number of events. Such events may e.g. be the number of accesses to the user data. The expiration condition may then e.g. be a maximum number of accesses to the user data which are granted freely until the expiration condition is reached. To monitor the condition the external storage medium according to an embodiment comprises a counter which counts the number of events, such as the number of accesses to the user data, while each access to the user data increments the counter. With this embodiment there may be achieved the effect that the user data may be accessed until the user data has been accessed as many times as defined in the maximum number of the counter value (the expiration condition). If the maximum number is reached, like explained before, there is performed a processing based on the access credentials which limits further access to the user data. This can be done e.g. by deleting the access credentials without which further free access to the user data is not possible anymore, or according to a further embodiment it may comprise an encryption of the previously unencrypted user data based on the access credentials so that from there on the access to the user data is limited and only users which know the access credentials (e.g. the key(s)) can further access the data. Therefore, after the expiration condition is met the user data is protected against unauthorised access.

Furthermore, according to an even further embodiment the expiration condition may be a certain period of time. In this case the expiration condition is compared with a value of a timer which e.g. starts to run after detaching the storage medium from the trusted device. With this embodiment there may be achieved the effect that the user data may be accessed until the expiration time has been reached.

According to an even further embodiment the expiration condition may be a certain point in time. In this case the time value of a timer may be compared with the time set as the expiration condition, and if this moment in time is reached the processing for limiting the access as described before is triggered and protects the user data against unauthorised access.

While so far the writing of the user data, the configuration of the access credentials and the configuration of the expiration condition have been described which are occurring while trusted device 1 and external medium 2 are connected, in the following the mechanism operating after setting these configurations or definitions will be described in somewhat more detail.

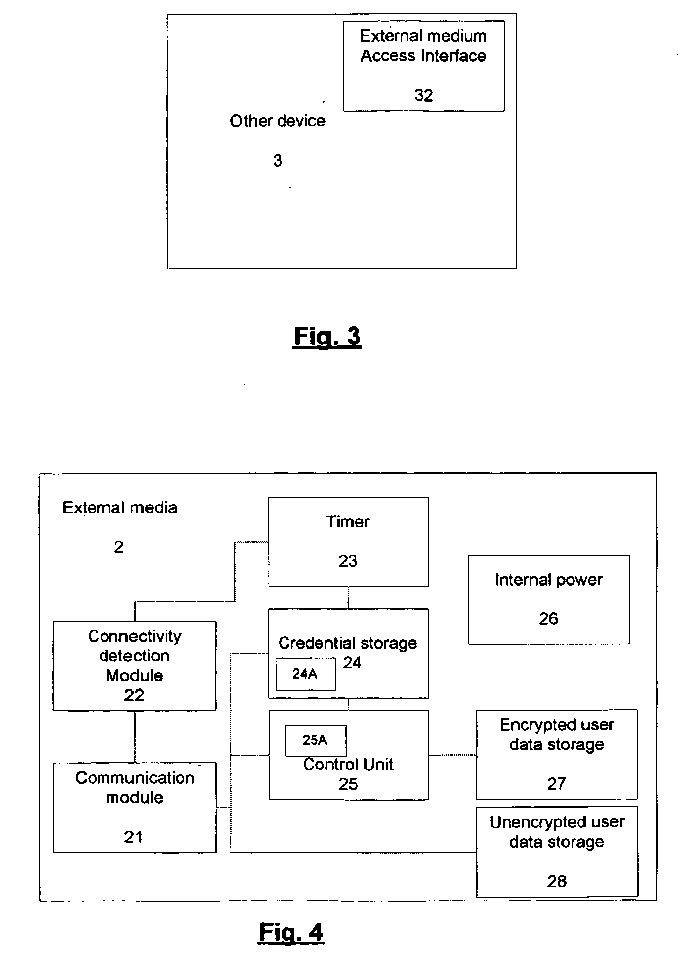

After writing the user data to the external medium and after configuring the access credentials and the expiration condition on the external medium, the external medium may be detached from the trusted device, which breaks connection 1.2. Now the external medium can be attached to any other device 3, schematically illustrated in Fig. 3. This other device 3 has also an external medium access interface 32 similar to the external medium access interface 12 shown in Fig. 2, and through this interface the user of device 3 (which may be different from the user of device 1) may try to access the user data which have been stored on the external medium. If this happens before the expiration condition is fulfilled (e.g. before the processing based on the access credentials is performed because the expiration condition has not yet been met), any user of (un-trusted) device 3 may freely access the user data stored on the storage medium 2 without the need to know any access credentials or without the necessity to have installed on device 3 a certain piece of software or any specific hardware except the general access interface though which the external storage medium can be accessed. This interface may, however, be a standard interface widely used for accessing external media such as a USB interface, an lrDA interface, or others, as was explained previously in connection with the external medium access interface of trusted device 1.

As long as the processing based on the access credentials to limit access to the user data has not been performed, any user of device 3 may therefore freely access the user data as long as the expiration condition is not yet fulfilled (e.g. as long as the expiration time has not yet been reached or the maximum number of accesses has not been reached). After the expiration condition is reached, however, the access is limited to any user of device 3, and such a user has to have special knowledge (e.g. has to know the access credentials or data based thereupon) to further access the user data stored on the external medium.

In the following the components of the trusted device are explained in somewhat more detail in connection with Fig. 2. Figure 2 shows the modules comprised by the trusted device: There is some external medium access interface 2. This interface 2 may comprise a hardware interface which is a standard interface, such as a USB interface. It further comprises some software that can be used to access the external medium 12. This software module according to an embodiment takes the form of a device driver which usually is shipped with the operating system. In other words, the interface 12 may be any standard interface for accessing an external medium.

In addition to this interface 12 the device 1 comprises an external medium configuration module 11. This module is operable to configure the external media and to transfer the access control credentials. According to one embodiment it is implemented as a software module 11, however, it may also be implemented in hardware or as a combination of software and hardware. According to one embodiment the module 11 may e.g. comprise a smartcard reader which is used to authenticate the user of device 1 and possibly further to generate or sign the access credentials based on the personalised smartcard of the user of device 1.

According to an embodiment this software is specific for the external media. It must be installed on the trusted device if the medium 2 is to be used not only for reading data therefrom as long as it is not protected, but also for writing data thereto in such a manner that after the expiration condition is met the data will be protected. The module 11 can be built in such a manner that the administrator privilege on the trusted device is not required, according to another embodiment only a user having administrator right will be able to use module 11.

Figure 3 shows an example of another (un-trusted) device 3 to which the external storage medium may be connected and where the user of device 3 may access the user data stored on the external storage medium as long as the access thereto is not yet limited. The other device comprises an external medium access module 32 which can be identical to module 12 of figure 2 and fulfils the same purpose. With this module the user of device 3 may access the user data stored on storage medium 2 as long as the protection processing has not yet limited the access thereto, in other words, as long as the expiration condition is not yet fulfilled.

In the following the operation of the external storage medium according to one embodiment will be explained in somewhat more detail in connection with Fig. 4. Figure 4 shows the architecture of the external media according to an embodiment of the invention.

Storage medium 2 comprises a communication module 21. This module is responsible for communicating with the trusted device 1 or the untrusted device 3. It may take the form of any standard interface, such as an USB interface, an lrDA interface, a bluetooth interface or something alike. Therefore, the communication module resembles the interfaces 12 and 32 shown in Figures 2 and 3, respectively.

The communication module 21 establishes and - e.g. in case of detaching the storage module from device 1 or 3 - terminates the connections 1.2 and 2.3, respectively, which are shown in Fig. 1.

The external storage medium according to an embodiment further comprises one or more storage units. In Fig. 4 there are shown a storage unit 27 for storing encrypted user data, and further a storage unit 28 for storing unencrypted user data. Physically these two storage units according to one embodiment may be implemented as one storage element, whereas the storage is divided logically into two areas, one for encrypted and one for decrypted data. This division may according to one embodiment be changed dynamically depending on the needed storage area for encrypted and decrypted data, respectively.

The storage medium 2 may further comprise a storage 24 for storing access credentials. This storage may be physically a part of the same storage as storage units 27 and 28, or it may be a separate storage unit dedicated for storing the access credentials which may e.g. comprise one or more keys.

The external medium may further comprise a control unit 25 which controls the overall operation of the external storage unit. The control unit may e.g. be implemented by a microprocessor which operates according to a program stored in one of the storages 24, 27 or 28 or in a further program storage (not shown). The control unit may control the communication module 21, thereby controlling access to the storage units 24, 27 and 28 and the communication with devices such as devices 1 or 3 to which the external medium may be connected.

The control module may further comprise an encryption module 25A which may be responsible for encrypting and/or decrypting data stored in the encrypted data storage unit 27. The encryption module may be implemented as a computer program executed by a microprocessor which is able to perform encryption and/or decryption and which for that purpose may use the access credentials (which may e.g. be one or more keys) stored in storage 24.

The communication module according to one embodiment mediates access to the unencrypted user data 28 and to the data that can be provided via the encryption module 25a. The communication module furthermore can forward the access credentials which it receives from trusted device 1 or which have been internally generated by control unit 25 to the credential storage 24.

The credential storage may further comprise a storage 24A. In this storage 24A there may be stored an expiration condition which defines a condition under which the access to the user data stored in the encrypted data storage unit 27 should not be freely accessible anymore. The expiration condition may according to one embodiment include an expiration time period which has to elapse until the expiration condition is considered to be met. According to a further embodiment the expiration condition may be an actual moment of time at which the expiration condition is considered to be met. According to an even further embodiment the expiration condition may correspond to a counter value representing a number of times a certain event such as e.g. an access to the user data has occurred. According to a further embodiment the expiration condition may be formed by a combination of a time data and a number count. The condition may then be considered to be met if both conditions, the time value and the number count, are met. According to another embodiment it may be considered sufficient if only one of the conditions, either the timing condition or the number count condition is met in order to consider the expiration condition as being met.

According to a further embodiment the expiration condition storage 24A may not be a part of the access credential storage but may be a separate storage or may e.g. be a part of one of storage units 27 or 28.

According to a further embodiment in one or more of the storages 24, 24A, 27 or 28 there is stored an access control list. The access control list may define which data (e.g. which files or directories) are freely accessible and which are to be protected. The access list thereby may further differentiate depending on the user. The access control list may be configured when writing data onto the external medium 2 by the user of trusted device 1. Thereafter the medium 2 is aware which data are to be protected and accordingly stores them either into the encrypted data storage 27 or into the unencrypted data storage 28. The data stored into the encrypted data storage 27 then according to one embodiment are stored in an encrypted form by encrypting them using the encryption unit 25A, and they may be decrypted by using the access credentials stored in credential storage 24 as long as the expiration condition has not yet been met.

The external medium 2 further comprises a timer and/or a counter 23. This timer and/or counter incrementally measures or monitors. a certain condition, such as e.g. a time period, the actual time, or a number of events like the number of accesses to the user data stored in the encrypted storage unit 27. The control unit 25 may compare the time and/or number value measured by the timer/counter 23, and it may compare it with the expiration condition stored in credential storage 25A.

The external medium further comprises an internal power source 26 (which may e.g. be a battery or any other internal or external power source). The internal power component 26 supplies the timer/counter and the credential storage, possibly also the control unit 25 with power to enable them being operational even though the external media is detached from power supply.

The medium 2 further comprises a connectivity detection module 22. The connectivity detection module is responsible for detecting whether the external medium 2 is presently connected to a device like devices 1 or 3 or whether it has been detached from such a device. The connectivity detection module 22 may e.g. be implemented by a microprocessor, e.g. by the microprocessor implementing control module 25, or it may according to a further embodiment be implemented by any other hardware or software component. The communication module 21 may report status information about the existence of a connection to the connectivity detection module 22 which then determines whether the medium 2 is presently connected to an device (such as devices 1 or 3) or not.

Once the connection detection module 22 discovers that the external medium is not attached to a device any more, it reports it to the control module 25 which in turn starts the timer/counter 23. This discovery could e.g. be based on the detection of power loss in the case of an USB connection or by any other suitable method, such as e.g. by repeatedly polling the connection and concluding that the connection is interrupted if no suitable polling result is received. In a similar manner the connectivity detection module also detects the establishment of a connection to a device (such as devices 1 or 3) and reports the connection to the control module 25.

According to one embodiment the timer/counter 23 consists of a timer and is informed by the expiration condition storage 24A about the appropriate expiration time. Once the timer gets triggered by the connectivity detection module 22 (or the control module 25 performing the triggering in response to the detection of the connectivity loss), it will then count down until the expiry time has elapsed. This corresponds then to the expiration condition being met, and in response thereto provides a trigger to cause the control module 25 to delete the access credentials from the credential storage 24. This has the effect that there are no access credentials anymore in credential storage 24 which could be used to decrypt the data which are stored in encrypted data storage 27. Therefore, a user of (untrusted) device 3 to which the medium may be connected will not be able anymore to access the data stored in the encrypted data storage 27. Only the user of device 1 who has written the data onto the medium 2 and who actually has configured the access credentials and the expiration condition will be able to access the data even after the expiration condition has been met. This is because the external medium configuration module 11 on device 1 is still aware of the access credentials which have been deleted from credential storage 24, and therefore the user of device 1 can still access the data. However, the data is then protected against unauthorised access by any third parties.

With this mechanism the user of device 1 may set a certain timeframe within which free access to the data on the medium 2 is possible. After the expiration time has lapsed, no free access is possible anymore. This is an effective protection mechanism for external storage media which nowadays are very small, used by almost everybody, and which are difficult to control from a security point of view. The media 2 may get lost, they may be stolen, or somehow get into the hands of unauthorised persons. By setting a suitably short timeframe it can be made sure that the data stored thereon is protected in such a case, while free access to the data within this timeframe is possible, e.g. for transferring a file from one computer to another. From a practical point of view it is therefore recommendable to set the expiration time to a relatively small value, e.g. a few minutes, which are sufficient for an unlimited use for the moment but which ensures protection after this short timeframe has elapsed.

According to one embodiment the expiration time may assume a predefined value (e.g. 5 minutes) unless the user of device 1 sets a different value using the configuration module 11. The external medium then only poses a security risk for this relatively short window of time, and thereafter the data stored thereon is only accessible in a limited manner.

According to one embodiment the count down can be stopped and the timer reset as soon as the external media is connected once again to device 1 as reported by the connectivity detection module. This may depend on the policy set e.g. in the credential storage 24.

According to one embodiment the credential storage 24 stores credentials that are communicated by the communication module 21. The credentials may include access control information such as which parts of the user data may be accessed. The access control information may be used in order to specify which data is allowed to be accessed by the user, and the control unit accordingly limits the access thereto.

The expiration condition, e.g. an expiration time, according to one embodiment is relative to the time of connection loss and defines the time limit for free access to the user data. This expiration time may or may not be reset after a new connection is detected. This timeout behaviour is communicated to the timer/counter module, and it thereby actually defines the condition based on which the access to the user data is either limited or without restriction.

The credential storage according to one embodiment stores cryptographic keys which have been written thereto during the configuration phase when the medium 2 was connected to the device 1. These keys are used by encryption module 25A to enable the encryption engine to encrypt and decrypt user data that is stored in the encrypted user data storage 27. As long as the keys are available and have not been deleted, any user may access the user data stored in the encrypted data storage unit 27, even if the user has no knowledge of the keys. This is because the encryption module decrypts these data and thereby enables the user to access the data despite he has no knowledge about the access credentials. However, once the keys have been deleted due to the expiration condition having been met, no unlimited access to the encrypted data in storage 27 is possible anymore.

According to the previously described embodiment the user data has been stored in the encrypted data storage (27) in an encrypted form when the medium (2) has been connected to the trusted device (1) and the data has been written onto the medium by the user of device (1). However, according to a further embodiment the user data may be written into the encrypted data storage (27) in an unencrypted form. In this embodiment the cryptographic keys also are written into the credential storage (24), however, as long as the expiration condition has not been met these cryptographic keys are not necessary for accessing the user data in storage 27 because these data are not encrypted. However, once the expiration condition is met, the cryptographic keys in credential storage 24 are used to encrypt the data stored in encrypted user data storage 27 by the encryption module 25 A. From this moment on the data stored in the encrypted user data storage 27 are not freely accessible any longer to any user, rather it will be necessary to know the cryptographic keys to decrypt the user data stored in storage 27. However, these cryptographic keys are not known by any untrusted party, they are only known by the user of device 1 who has configured the external medium with the access credentials when storing the data onto the medium 2. Therefore, no untrusted third party will be able to access the data stored in storage 27 after the expiration condition has been met.

According to a further embodiment the timer/counter 23 actually is a counter, and this counter counts a number of events. According to one embodiment these events are the number of accesses to the data stored in encrypted user data storage 27. Once the connectivity detection module 22 detects the connectivity loss, the counter 23 is triggered to start to operate and it then starts the number of accesses to the encrypted user data storage 27. During the configuration of the external medium using the external medium configuration module 11 the expiration condition has been set as a number of events, according to one embodiment the number of events corresponds to the number of accesses to the data stored in storage 27. This expiration condition is stored in expiration condition storage 24 A. After having detached the medium 2 from the device 1 (which is detected by the connectivity detection module 22) the counter starts to operate and the control unit 25 compares the value of the counter 23 with the expiration condition set in expiration condition storage 24A. Once those coincide, in other words if the maximum number of accesses has been reached, there is triggered a processing based on the credentials stored in the credential storage, such as the deletion of the cryptographic keys (in case of the data stored in storage 27 being encrypted) or the encryption of the data stored in storage 27 (if these data have previously been unencrypted). Then the data stored in the storage 27 are not freely accessible any more.

According to a further embodiment the timer/counter 23 may comprise a timer module and a counter module, and the expiration condition storage 24A may have stored a timing condition and a counting number condition as expiration conditions. The complete expiration condition will then e.g. be fulfilled if both single expiration conditions are met, the timing condition as well as the access number condition. According to a further embodiment it will be considered sufficient if one of these conditions is met, and in such a case there will be triggered the processing which then limits the access to the data stored in storage 27, either by deleting the cryptographic keys or by encrypting the data stored therein.

According to an even further embodiment the processing for limiting the access to the data stored in encrypted user data storage 27 simply consists in the deletion of this data. This has the effect that thereafter the data cannot be read any longer by anybody, however, it avoids the necessity to provide an encryption module 25A and it further avoids the necessity to have a credential storage in which the cryptographic keys are stored. In this embodiment the processing is much more simple, however, the embodiment comes along with the disadvantage that after the deletion of the data stored in user data storage 27 (or 28) this data is not accessible any more to anybody.

According to a further embodiment the expiration condition is not corresponding to an expiration period but actually to an expiration time, in other words to a certain moment in time which is set in expiration conditions storage 24 A. In this case the timer 23 is not a timer which starts to count from zero after detection of the connectivity loss, but rather it continuously measures the actual time. The control unit 25 continuously compares this time measured by timer 23 with the time stored in expiration condition storage 24 A, and if both coincide the processing is started which limits the access to the data stored in user data storage 27 or 28.

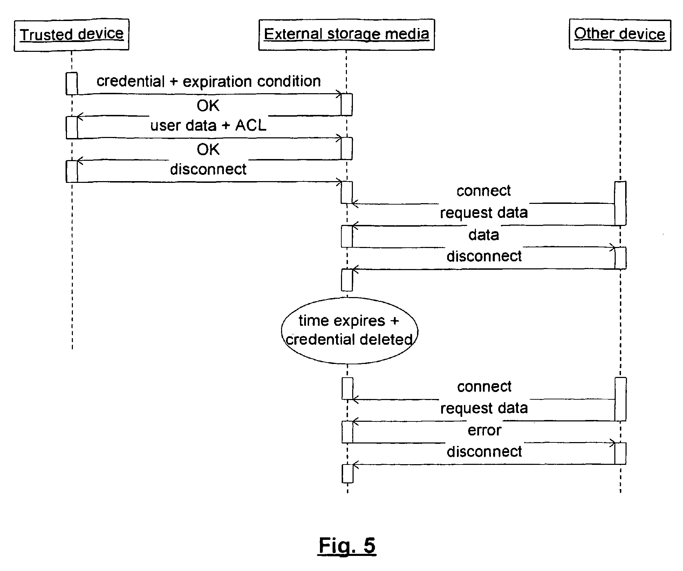

In the following there will be described an operation of an embodiment according to the invention in connection with the sequence diagram shown in Fig. 5. Figure 5 on the left hand side shows the trusted device 1, in the middle there is shown the external storage medium 2, and on the right hand side there is shown the other device 3.

At first, the trusted device 1 is connected to the external storage medium 2, and the access credentials and the expiration condition (the credentials and the life time) are configured and stored in the external storage medium. The configuration is acknowledged with an acknowledgement message OK.

Then the user data are written onto the external storage medium, possibly with an access control list ACL which defines which data are freely accessible and which data are to be protected by limiting the access thereto. Again, the transmission is acknowledged by an acknowledgement message OK. Thereafter, the external storage medium is disconnected from the trusted device 1.

The disconnection triggers, as described herein before, the operation of the timer/counter 23. The external storage medium may then be connected to another device, and the other device may request data from the storage medium. The data is accessible and transmitted as long as the expiration condition is not met. However, after some time or after a number of accesses to the user data, the expiration condition actually is met and the processing for limiting the access to the user data is carried out, e.g. by deleting the access credential as shown in Fig. 5. If thereafter the external medium is connected to another device 3 and this device requests data from the external medium, the access to this data is limited. The reason for this may be that the requested data is encrypted, and that the corresponding decryption keys are not accessible any longer, because they have been deleted. In this case, an error message is issued and thereafter the other device 3 has to be disconnected without having been able to access the requested data. Another reason in case of another embodiment may be that the previously unencrypted data now are encrypted and are not readable anymore for untrusted third parties who have no knowledge about the necessary decryption key(s).

The skilled person will regularly recognize that the components and modules described in connection with the embodiments of the invention herein before may be implemented either in software or in hardware or by a combination of both of them.

The skilled person will further recognise that the external storage medium in accordance with embodiments of the invention may instead of being connected to a computer be connected to any other device capable of writing user data thereon or reading user data therefrom, such devices being e.g. mobile phones, smartphones, PDAs, or any other computing devices.

## Claims

1. An external storage medium (2) which can be connected to a computer and onto which user data can be written or from which user data can be read by a user of said computer, that medium comprising:
a storage unit (27) for storing therein said user data;
a storage unit (24A) for storing therein an expiration condition;
a counter (23) and/or a timer (23) for incrementally measuring a time value and/or a number of events;
a connectivity detection unit (22) for detecting whether said external storage unit (2) is connected to said computer or not;
a control module (25) for if said connectivity detection unit (22) detects that said external storage medium (2) has been detached from said computer, triggering said counter (3) or said timer (3) to start to operate, said control module (25) being adapted to compare the value of said measured time and/or said measured number of events with said expiration condition, whereas if said control unit (25) determines that said value of said measured time and/or said measured number of events coincides with said expiration condition said control unit (25) carries out a processing such that said user data cannot be freely accessed any longer by a user of a computer to which said external storage medium (2) is connected.

2. The external storage medium of claim 1, further comprising:
a storage unit (25A) for storing therein access credentials based on which a user is either granted or denied access to said user data, wherein said processing such that said user data cannot be freely accessed any longer by a user of a computer to which said external storage medium is connected comprises:
encrypting or decrypting said user data based on said access credentials.

3. The external storage medium of claim 1 or 2, wherein said processing such that said user data cannot be freely accessed any longer by a user of a computer to which said external storage medium is connected comprises:
deleting said user data.

4. The external storage medium of one of claims 1 to 3, whereas said processing such that said user data cannot be freely accessed any longer by a user of a computer to which said external storage medium is connected comprises one of the following:
deleting the access credentials stored in said external storage medium.

5. The external storage medium according to one of claims 1 to 4, wherein
said events the number of which is measured by said counter are accesses to said user data by a user.

6. The external storage medium of one of the preceding claims, whereas
said expiration condition is one or more of the following:
a number of accesses to said user data;
an expiration time after said external storage medium has been detached from said computer.

7. The external storage medium according to one of the preceding claims, said external storage medium further comprising:
an encryption module (25A) for encrypting and/or decrypting said user data based on said access credentials;
a storage for storing therein encrypted user data;
a storage for storing therein unencrypted user data.

8. The external storage medium according to one of the preceding claims, wherein
said expiration condition assumes a predefined value unless it is explicitly changed by the user of said computer.

9. The external storage medium according to one of the preceding claims, further comprising:
a module (25) for defining said access credentials to be valid for dedicated files and/or directories only.

10. An apparatus comprising:
an external medium access interface (12) for being connected to an external storage medium (2) according to one of the preceding claims;
an external medium configuration module (11) for enabling said user of said computer to configure or define one or more of the following:
the expiration condition to be set in said external storage medium (2);
the access credentials to be stored in said external storage medium (2).

## Patentansprüche

1. Externes Speichermedium (2), das mit einem Computer verbunden werden kann und in das durch einen Anwender des Computers Anwenderdaten geschrieben werden können oder aus dem durch einen Anwender des Computers Anwenderdaten gelesen werden können, wobei das Medium umfasst:
eine Speichereinheit (27) zum Speichern der Anwenderdaten darin;
eine Speichereinheit (24A) zum Speichern einer Ablaufbedingung;
einen Zähler (23) und/oder einen Zeitgeber (23) zum inkrementellen Messen eines Zeitwerts und/oder einer Anzahl von Ereignissen;
eine Verbindungserfassungseinheit (22) zum Erfassen, ob die externe Speichereinheit (2) mit dem Computer verbunden ist oder nicht;
ein Steuermodul (25), um dann, wenn die Verbindungserfassungseinheit (22) erfasst, dass das externe Speichermedium (2) von dem Computer getrennt worden ist, den Zähler (3) oder den Zeitgeber (3) auszulösen, damit er zu arbeiten beginnt, wobei das Steuermodul (25) so beschaffen ist, dass es den Wert der gemessenen Zeit und/oder der gemessenen Anzahl von Ereignissen mit der Ablaufbedingung vergleicht, wobei dann, wenn die Steuereinheit (25) feststellt, dass der Wert der gemessenen Zeit und/oder der gemessenen Anzahl von Ereignissen mit der Ablaufbedingung übereinstimmt, die Steuereinheit (25) eine Verarbeitung ausführt, derart, dass durch einen Anwender eines Computers, mit dem das externe Speichermedium (2) verbunden ist, auf die Anwenderdaten nicht länger frei zugegriffen werden kann.

2. Externes Speichermedium nach Anspruch 1, das ferner umfasst:
eine Speichereinheit (25A) zum Speichern von Zugriffsberechtigungsnachweisen, auf deren Grundlage einem Anwender ein Zugriff auf die Anwenderdaten entweder gewährt oder verweigert wird, wobei die Verarbeitung derart, dass auf die Anwenderdaten durch einen Anwender eines Computers, mit dem das externe Speichermedium verbunden ist, nicht länger frei zugegriffen werden kann, umfasst:
Verschlüsseln oder Entschlüsseln der Anwenderdaten anhand der Zugriffsberechtigungsnachweise.

3. Externes Speichermedium nach Anspruch 1 oder 2, wobei die Verarbeitung derart, dass auf die Anwenderdaten durch einen Anwender eines Computers, mit dem das externe Speichermedium verbunden ist, nicht länger frei zugegriffen werden kann, umfasst:
Löschen der Anwenderdaten.

4. Externes Speichermedium nach einem der Ansprüche 1 bis 3, wobei die Verarbeitung derart, dass durch einen Anwender eines Computers, mit dem das externe Speichermedium verbunden ist, auf die Anwenderdaten nicht länger frei zugegriffen werden kann, eines der folgenden umfasst:
Löschen der Zugriffsberechtigungsnachweise, die in dem externen Speichermedium gespeichert sind.

5. Externes Speichermedium nach einem der Ansprüche 1 bis 4, wobei
die Ereignisse, deren Anzahl durch den Zähler gemessen wird, Zugriffe auf die Anwenderdaten durch einen Anwender sind.

6. Externes Speichermedium nach einem der vorhergehenden Ansprüche, wobei
die Ablaufbedingung eine oder mehrere der folgenden Bedingungen umfasst:
eine Anzahl von Zugriffen auf die Anwenderdaten;
eine Ablaufzeit, die beginnt, nachdem das externe Speichermedium von dem Computer getrennt worden ist.

7. Externes Speichermedium nach einem der vorhergehenden Ansprüche, wobei das externe Speichermedium ferner umfasst:
ein Verschlüsselungsmodul (25A) zum Verschlüsseln und/oder Entschlüsseln der Anwenderdaten anhand der Zugriffsberechtigungsnachweise;
einen Speicher zum Speichern verschlüsselter Anwenderdaten darin;
einen Speicher zum Speichern nicht verschlüsselter Anwenderdaten darin.

8. Externes Speichermedium nach einem der vorhergehenden Ansprüche, wobei
die Ablaufbedingung einen im Voraus definierten Wert annimmt, solange sie nicht durch den Anwender des Computers explizit geändert wird.

9. Externes Speichermedium nach einem der vorhergehenden Ansprüche, das ferner umfasst:
ein Modul (25) zum Definieren der Zugriffsberechtigungsnachweise als gültig nur für bestimmte Dateien und/oder Verzeichnisse.

10. Vorrichtung, die umfasst:
eine Schnittstelle (12) für den Zugriff auf ein externes Medium, die mit einem externen Speichermedium (2) nach einem der vorhergehenden Ansprüche verbunden werden kann;
ein Modul (11) zum Konfigurieren des externen Mediums, um dem Anwender des Computers zu ermöglichen, eines oder mehrere der folgenden Elemente zu konfigurieren oder zu definieren:
die Ablaufbedingung, die in dem externen Speichermedium (2) gesetzt werden soll;
die Zugriffsberechtigungsnachweise, die in dem externen Speichermedium (2) gespeichert werden sollen.

## Revendications

1. Support de mémoire externe (2) qui peut être connecté à un ordinateur et sur lequel des données d'utilisateur peuvent être écrites ou à partir duquel des données d'utilisateur peuvent être lues par un utilisateur dudit ordinateur, ce support comprenant :
une unité de mémoire (27) pour y mémoriser lesdites données d'utilisateur ;
une unité de mémoire (24A) pour y mémoriser une condition d'expiration ;
un compteur (23) et/ou une minuterie (23) pour mesurer, de manière incrémentielle, une valeur de durée et/ou un nombre d'événements ;
une unité de détection de connectivité (22) pour détecter si ladite unité de mémoire externe (2) est connectée ou non audit ordinateur ;
un module de commande (25) destiné, si ladite unité de détection de connectivité (22) détecte que ledit support de mémoire externe (2) a été détaché dudit ordinateur, à déclencher ledit compteur (23) ou ladite minuterie (23) afin de démarrer leur fonctionnement, ledit module de commande (25) étant adapté pour comparer la valeur de ladite durée mesurée et/ou ledit nombre mesuré d'évènements à ladite condition d'expiration, alors que si ladite unité de commande (25) détermine que ladite valeur de ladite durée mesurée et/ou ledit nombre mesuré d'évènements coïncide avec ladite condition d'expiration ladite unité de commande (25) met en oeuvre un traitement tel que lesdites données d'utilisateur ne peuvent plus faire l'objet d'un libre accès par un utilisateur d'un ordinateur auquel ledit support de mémoire externe (2) est connecté.

2. Support de mémoire externe selon la revendication 1, comprenant, en outre :
une unité de mémoire (25A) pour y mémoriser des références d'accès sur la base desquelles l'utilisateur se voit accorder ou dénier un accès auxdites données d'utilisateur, dans lequel ledit traitement tel que lesdites données d'utilisateur ne peuvent plus faire l'objet d'un libre accès par un utilisateur d'un ordinateur auquel ledit support de mémoire externe est connecté comprend :
le codage ou le décodage desdites données d'utilisateur sur la base desdites références d'accès.

3. Support de mémoire externe selon la revendication 1 ou 2, dans lequel ledit traitement tel que lesdites données d'utilisateur ne peuvent plus faire l'objet d'un libre accès par un utilisateur d'un ordinateur auquel ledit support de mémoire externe est connecté comprend :
la suppression desdites données d'utilisateur.

4. Support de mémoire externe selon l'une des revendications 1 à 3, dans lequel ledit traitement tel que lesdites données d'utilisateur ne peuvent plus faire l'objet d'un libre accès par un utilisateur d'un ordinateur auquel ledit support de mémoire externe est connecté comprend :
la suppression des références d'accès mémorisées dans ledit support de mémoire externe.

5. Support de mémoire externe selon l'une des revendications 1 à 4, dans lequel lesdits évènements dont le nombre est mesuré par ledit compteur sont les accès auxdites données d'utilisateur par un utilisateur.

6. Support de mémoire externe selon l'une des revendications précédentes, dans lequel ladite condition d'expiration correspond à un ou plusieurs des éléments suivants :
un nombre d'accès auxdites données d'utilisateur ;
une durée d'expiration après que ledit support de mémoire externe a été détaché dudit ordinateur.

7. Support de mémoire externe selon l'une des revendications précédentes, ledit support de mémoire externe comprenant, en outre :
un module de codage (25A) pour coder et/ou décoder lesdites données d'utilisateur sur la base desdites références d'accès ;
une mémoire pour y mémoriser des données d'utilisateur codées ;
une mémoire pour y mémoriser des données d'utilisateur décodées.

8. Support de mémoire externe selon l'une des revendications précédentes, dans lequel ladite condition d'expiration prend une valeur prédéfinie à moins qu'elle ne soit explicitement modifiée par l'utilisateur dudit ordinateur.

9. Support de mémoire externe selon l'une des revendications précédentes, comprenant, en outre :
un module (25) pour définir lesdites références d'accès afin qu'elles ne soient valides que pour des fichiers et/ou des répertoires dédiés.

10. Dispositif, comprenant :
une interface d'accès de support externe (12) destinée à être connectée à un support de mémoire externe (2) selon l'une des revendications précédentes;
un module de configuration de support externe (11) destiné à permettre audit utilisateur dudit ordinateur de configurer ou de définir un ou plusieurs des éléments suivants :
la condition d'expiration devant être fixée dans ledit support de mémoire externe (2) ;
les références d'accès devant être mémorisées dans ledit support de mémoire externe (2).
